# EUROPÄISCHE PATENTSCHRIFT

(11) **EP 2 409 793 B1**
(45) Veröffentlichungstag und Bekanntmachung des Hinweises auf die Patenterteilung: **05.06.2013**
(21) Anmeldenummer: 11005951.6
(22) Anmeldetag: 20.07.2011
(51) Int. Cl.: B21D 22/02, B21D 31/00, B21D 37/20, B21J 15/12, B21K 23/00, B44B 5/00, B44C 1/24, F01D 5/14

(54) **Verfahren zur Herstellung eines Werkstücks mit definierter Oberfläche**
Method for manufacturing a workpiece with defined surface
Procédé de fabrication d'une pièce dotée d'une surface déterminée

(30) Priorität: 23.07.2010 DE 102010032098
(43) Veröffentlichungstag der Anmeldung: 25.01.2012
(73) Patentinhaber: Rolls-Royce Deutschland Ltd & Co KG, 15827 Blankenfelde-Mahlow (DE); FormTech GmbH, 28844 Weyhe-Dreye (DE)
(72) Erfinder: Schreiber, Karl, 15838 Am Mellensee (DE); Beck, Werner, 28844 Weyhe (DE)
(74) Vertreter: Weber, Joachim

(56) Entgegenhaltungen:
- WO-A1-01/58615
- GB-A- 505 358
- GB-A- 2 070 486
- JP-A- 2004 025 273

## Beschreibung

Die Erfindung betrifft ein Verfahren zur Herstellung eines Werkstücks mittels eines Umformwerkzeugs. Im Einzelnen betrifft die Erfindung die Ausgestaltung eines Verfahrens, um auf dem Werkstück eine definierte Oberfläche zu erzeugen.

Die WO 01/58615 A1 offenbart ein Verfahren zur Herstellung eines Werkstücks mit einem einen Formhohlraum aufweisenden Umformwerkzeug, bei welchem zur Ausbildung einer Oberflächenstruktur auf zumindest einer Oberfläche des Umformwerkzeugs ein zumindest an einer Oberfläche profiliertes Prägeelement angeordnet wird, dessen Profilierung durch den Umformvorgang auf die Oberfläche des Werkstücks aufgebracht wird.

Ein erfindungsgemäß herstellbares Werkstück ist beispielsweise ein hybrides Bauteil, insbesondere eine Fan- oder Leitschaufel für ein Gasturbinentriebwerk. Das Bauteil besteht beispielsweise aus einem Faserverbundwerkstoff, aus welchem eine Tragstruktur gefertigt ist, deren Oberfläche teilweise oder vollständig mit einer Metallstruktur belegt ist.

Insbesondere die Fanschaufeln eines Fan-Gasturbinentriebwerks sind durch Fliehkräfte, Gasdruck und auftretende Schwingungen erheblichen Belastungen ausgesetzt. Aus diesem Grunde wird auf die Oberfläche der Tragstruktur eine Metallstruktur aufgebracht, beispielsweise aufgeklebt. Die Klebeverbindung muss so ausgestaltet sein, dass auch eine aus Titanwerkstoffen bestehende Metallstruktur sicher verklebt werden kann.

Die Fügefläche der Metallstruktur erfordert eine spezifische Oberflächenstruktur, um bei der Verklebung eine ausreichend feste Verankerung vornehmen zu können.

Aus der WO 01/58615 A1 ist es bekannt, Werkzeuge einer Tiefziehpresse, insbesondere Werkzeugeinsätze 29, 30 von Stempeln bzw. Matrizen 22, 23 mit einer Verformungsstruktur 3 zu versehen, um auf das Werkstück eine Oberflächenstruktur aufzubringen. Es sind somit die Werkzeuge selbst an ihren Oberflächen mit einer Struktur versehen.

Auch aus der JP 2004 025273 A ist eine Strukturierung der Werkzeuge selbst vorbekannt, welche bei einem Umformvorgang eine Oberflächenstruktur auf einem Werkstück erzeugt.

Auch die GB 2 070 486 A zeigt eine Strukturierung der Oberfläche der Werkzeuge selbst, wobei diese Strukturierung durch eingelegte Bauelemente, wie etwa Kugeln oder Stäbe erzeugt wird.

Die GB 505 358 A beschäftigt sich ganz allgemein mit der Aufbringung einer Oberflächenstruktur auf eine Metallplatte, wobei eine Ausgestaltungsform vorsieht, dass ein Stempelvorgang durchgeführt wird, bei welchem zwei flache Metallplatten gegeneinander gedrückt werden, zwischen welchen ein Drahtgitter angeordnet ist.

Der Erfindung liegt die Aufgabe zugrunde, ein Verfahren der eingangs genannten Art zu schaffen, welches bei einfachem Aufbau und einfacher, kostengünstiger Herstellbarkeit geeignet ist, bei dem Werkstück eine vorgegebene Oberflächenstruktur zu erzeugen.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist vorgesehen, dass das Werkstück mittels eines Umformwerkzeugs umgeformt wird. Das Umformwerkzeug weist in üblicher Weise einen Formhohlraum aus, in welchen das Werkstück umgeformt wird. Erfindungsgemäß ist vorgesehen, dass auf zumindest einer Oberfläche des Umformwerkzeugs ein zumindest an einer Oberfläche profiliertes Prägeelement angeordnet wird, dessen Profilierung durch den Umformvorgang auf die Oberfläche des Werkstücks aufgebracht bzw. übertragen wird.

Beispielsweise ist somit vorgesehen, dass die Oberfläche des Umformwerkzeugs in beliebiger Weise ausgebildet sein kann, beispielsweise geschliffen und poliert, so wie dies aus dem Stand der Technik bekannt ist. Um dem Werkstück eine Oberflächenstruktur aufzuprägen, wird das Prägeelement zwischen das Werkstück (Werkstückrohling, nicht oder nur teilweise umgeformt) und das Umformwerkzeug eingelegt. Durch die beim Umformen aufgebrachten Kräfte wird die profilierte Oberflächenstruktur des Prägeelements auf das Werkstück übertragen.

Erfindungsgemäß ist das Prägeelement in Form eines Drahtgeflechts ausgebildet.

Durch die erfindungsgemäß geschaffene Möglichkeit, ein separates Prägeelement zwischenzulegen, ist es möglich, das Prägeelement mit einer geeigneten Festigkeit und aus einem geeigneten Werkstoff herzustellen. Das Prägeelement kann beispielsweise aus einem hochwarmfesten Nickel-Basis-Werkstoff gefertigt werden. Derartige hochwarmfeste Nickel-Basis-Werkstoffe werden beispielsweise unter der Bezeichnung HAYNES 242 oder 244 auf dem Markt angeboten. Beim Warmumformen von Titanwerkstoffen ist es somit erfindungsgemäß nicht erforderlich, das Umformwerkzeug mit aufwendigen Oberflächenstrukturen zu versehen. Hierdurch ergibt sich eine einfachere Ausgestaltung des Umformwerkzeugs. Weiterhin ist es nicht erforderlich, das Umformwerkzeug ständig auf Verschleiß zu überprüfen und/oder in kurzen Intervallen nachzuarbeiten. Vielmehr wird das erfindungsgemäße Prägeelement, welches entweder fest mit dem Umformwerkzeug verbunden ist oder lose in dieses eingelegt werden kann, ausgetauscht, sofern dies erforderlich ist. Es verschleißt somit lediglich das Prägeelement, nicht jedoch das Umformwerkzeug.

Da insbesondere für Titanwerkstoffe erhöhte Umformtemperaturen vorliegen, beispielsweise zwischen 600°C und 800°C, ist es günstig, wenn das Prägeelement aus einem warmfesten Werkstoff gefertigt ist. Die Werkstoffauswahl kann dabei speziell auf die auszubildende Oberflächenstruktur des Werkstücks erfolgen. Dabei ist es erfindungsgemäß vorteilhaft, dass das Prägeelement hinsichtlich seines Aufbaues und seiner Struktur einfach ausgebildet sein kann und dass es zur Erzeugung der Oberflächenstruktur des Werkstücks nicht erforderlich ist, das Umformwerkzeug mit einer entsprechenden Oberflächenstruktur oder Profilierung zu versehen. Im Hinblick auf die Herstellkosten und die erforderlichen Materialvorgaben derartiger Umformwerkzeuge ist eine Herstellung der Umformwerkzeuge aus einem hochwarmfesten Nickel-Basis-Werkstoff mit direkt eingebrachter Feinstruktur unzweckmäßig, da die Feinstruktur einem Verschleiß unterworfen ist, sehr teuer ist und sehr schlecht zu bearbeiten ist.

Das erfindungsgemäße Verfahren eignet sich für die Herstellung unterschiedlichster hybrider Bauteile, bei welchen eine Tragstruktur mit einem metallischen Bauteil verbunden wird. Anwendungsgebieten sind nicht nur die beschriebenen Fanschaufeln, sondern auch andere Elemente eines Gasturbinentriebwerks, sowie ganz allgemein beispielsweise Krafteinleitungselemente oder Ähnliches an beliebigen Maschinen oder Vorrichtungen.

Bei dem Prägeelement, welches in Form eines Drahtgeflechtes ausgebildet ist, bewegt sich die Drahtdicke in einem Bereich von 0,1 bis 1 mm . Die Maschenweite beträgt zwischen 0,1 bis 3 mm. Bei einer derartigen Gitterstruktur ist es vorteilhaft, dass das Gitter sich in einfacher Weise der Geometrie des Werkstücks bzw. des Umformwerkzeugs anpasst, so dass flache Teile als Prägeelement einlegbar sind.

Im Folgenden wird die Erfindung anhand eines Ausführungsbeispiels in Verbindung mit der Zeichnung beschrieben. Dabei zeigt:
- Fig. 1: eine schematische Darstellung eines erfindungsgemäß zu verwendenden Umformwerkzeugs,
- Fig. 2: eine vergrößerte Darstellung eines als Drahtgitter ausgebildeten Prägeelements, und
- Fig. 3: eine Schnittansicht einer nach dem erfindungsgemäßen Verfahren hergestellten Fanschaufel.

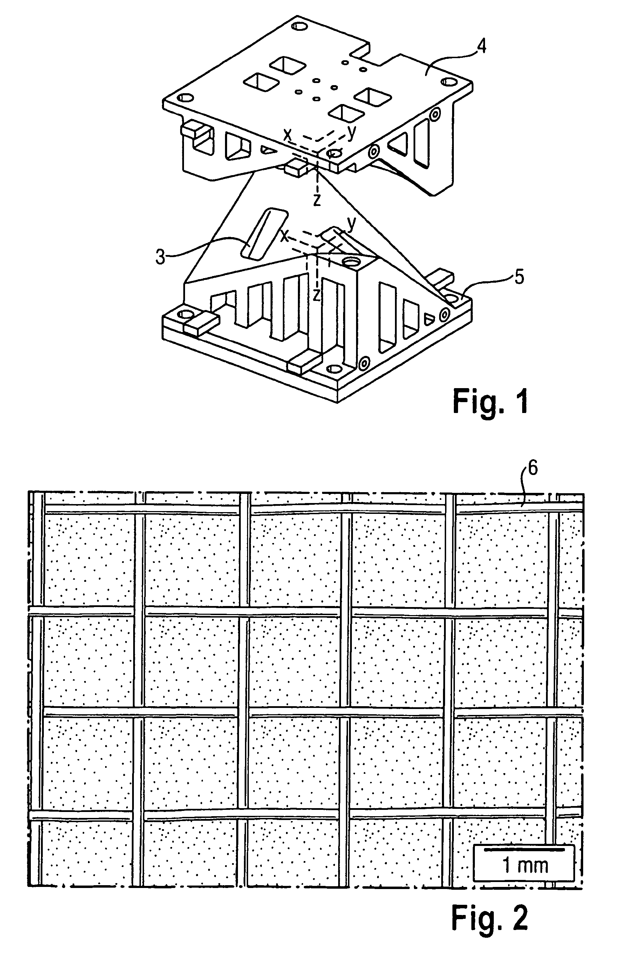

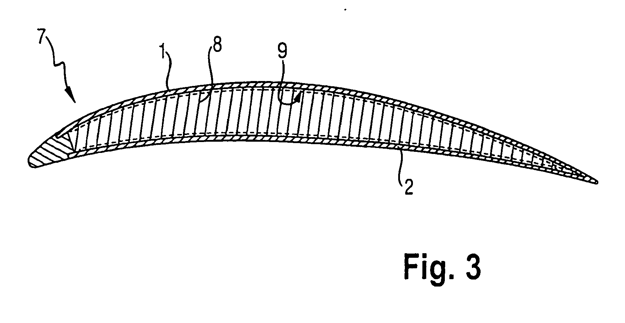

Die Fig. 1 zeigt ein Oberwerkzeug 4 und ein Unterwerkzeug 5 eines Umformwerkzeugs, wobei zumindest ein Formhohlraum 3 vorgesehen ist, in welchen ein nicht dargestellter Rohling eines Werkstücks 1, 2 (siehe Fig. 3) einlegbar ist. Zwischen dem Werkstück 1, 2 und der Oberfläche des Werkzeugs 4, 5 wird erfindungsgemäß ein Prägelement 6 eingelegt, welches als Drahtgitter ausgebildet ist, so wie dies in Fig. 2 dargestellt ist.

Die Fig. 3 zeigt eine Schnittansicht einer Fanschaufel 7, welche eine Tragstruktur 8 aufweist. Diese kann zellenförmig oder wabenförmig ausgebildet werden. Mittels einer Zwischenschicht 9 wird zur Beplankung ein oberes Werkstück 1 sowie ein unteres Werkstück 2 aufgeklebt. Die Werkstücke 1, 2 sind durch das erfindungsgemäß beschriebene Verfahren hergestellt und weisen an ihrer der Zwischenschicht bzw. der Tragstruktur 8 zugewandten Seite eine durch das Prägeelement 6 erzeugte definierte Oberflächenstruktur auf.

### Bezugszeichenliste

- 1, 2: Werkstück
- 3: Formhohlraum
- 4: Oberwerkzeug
- 5: Unterwerkzeug
- 6: Prägeelement
- 7: Schaufel
- 8: Tragstruktur
- 9: Zwischenschicht

## Patentansprüche

1. Verfahren zur Herstellung eines Werkstücks (1, 2) mit einem einen Formhohlraum (3) aufweisenden Umformwerkzeug (4, 5), bei welchem auf zumindest einer Oberfläche des Umformwerkzeugs (4, 5) ein zumindest an einer Oberfläche profiliertes, Prägeelement (6) zwischen das Werkstück (1, 2) und das Umformwerkzeug (4, 5) eingelegt wird, dessen Profilierung durch den Umformvorgang zur Ausbildung einer Oberflächenstruktur auf die Oberfläche des Werkstücks (1, 2) aufgebracht wird, wobei das Prägeelement (6) in Form eines Drahtgeflechts ausgebildet ist und eine Drahtdicke zwischen 0,1 und 1 mm und/oder eine Maschenweite in einem Bereich von 0,1 bis 3 mm aufweist.

2. Verfahren nach Anspruch 1, **dadurch gekennzeichnet, dass** das Prägeelement (6) in Form einer elastischen, folienartigen Platte ausgebildet ist.

3. Verfahren nach einem der Ansprüche 1 oder 2, **dadurch gekennzeichnet, dass** das Prägeelement (6) mit dem Umformwerkzeug (4, 5) verbunden wird.

4. Verfahren nach einem der Ansprüche 1 oder 2, **dadurch gekennzeichnet, dass** das Prägeelement (6) lose in das Umformwerkzeug (4, 5) eingelegt wird.

5. Verfahren nach einem der Ansprüche 1 bis 4, **dadurch gekennzeichnet, dass** das Prägeelement (6) aus einem hochwarmfesten Werkstoff gefertigt ist.

6. Verfahren nach Anspruch 5, **dadurch gekennzeichnet, dass** das Prägeelement aus einem hochwarmfesten Nickel-Basis-Werkstoff gefertigt ist.

7. Verfahren nach einem der Ansprüche 1 bis 6, **dadurch gekennzeichnet, dass** das Werkstück (1, 2) Teil einer Schaufel (7) ist, insbesondere einer Fanschaufel einer Fluggasturbine.

8. Verfahren nach einem der Ansprüche 1 bis 7, **dadurch gekennzeichnet, dass** das Werkstück (1, 2) Teil eines Hybriden aus mehreren Teilen gefügten Bauteils ist.

## Claims

1. Method for the manufacture of a workpiece (1, 2) by means of a forming tool (4, 5) provided with a cavity (3), in which on at least one surface of the forming tool (4, 5), an embossing element (6) profiled on at least one surface is inserted between the workpiece (1, 2) and the forming tool (4, 5), the profile of the embossing tool (6) being imparted to the surface of the workpiece (1, 2) by the forming process for producing a surface structure, with the embossing element (6) being provided in the form of a wire mesh and having a wire thickness between 0.1 and 1 mm and/ or a mesh width ranging from 0.1 to 3 mm.

2. Method in accordance with Claim 1, **characterized in that** the embossing element (6) is provided in the form of an elastic, foil-type plate.

3. Method in accordance with one of the Claims 1 or 2, **characterized in that** the embossing element (6) is connected to the forming tool (4, 5).

4. Method in accordance with one of the Claims 1 or 2, **characterized in that** the embossing element (6) is loosely inserted into the forming tool (4, 5).

5. Method in accordance with one of the Claims 1 to 4, **characterized in that** the embossing element (6) is made of a high-temperature resistant material.

6. Method in accordance with Claim 5, **characterized in that** the embossing element (6) is made of a high-temperature resistant nickel-base material.

7. Method in accordance with one of the Claims 1 to 6, **characterized in that** the workpiece (1, 2) is part of a blade (7), in particular of a fan blade of an aircraft gas turbine.

8. Method in accordance with one of the Claims 1 to 7, **characterized in that** the workpiece (1, 2) is part of a hybrid component composed of several elements.

## Revendications

1. Procédé destiné à fabriquer une pièce d'oeuvre (1, 2) avec un outil de formage (4, 5) présentant une cavité (3), et dans lequel, sur au moins une surface de l'outil de formage (4, 5), un élément d'estampage (6) profilé sur au moins une face est inséré entre la pièce d'oeuvre (1, 2) et l'outil de formage (4, 5), et dont le profilage est appliqué par l'opération de formage sur la surface de la pièce d'oeuvre (1, 2) afin d'y former une structure superficielle, sachant que l'élément d'estampage (6) est conçu sous forme d'un treillis en fil métallique et présente une épaisseur de fil comprise entre 0,1 et 1 mm et/ou une ouverture de maille dans une plage de 0,1 à 3 mm.

2. Procédé selon la revendication n° 1, **caractérisé en ce que** l'élément d'estampage (6) est conçu sous forme d'une plaque élastique lamellaire.

3. Procédé selon une des revendications n° 1 ou n° 2, **caractérisé en ce que** l'élément d'estampage (6) est relié à l'outil de formage (4, 5).

4. Procédé selon une des revendications n° 1 ou n° 2, **caractérisé en ce que** l'élément d'estampage (6) est inséré sans être fixé dans l'outil de formage (4, 5).

5. Procédé selon une des revendications n° 1 à n° 4, **caractérisé en ce que** l'élément d'estampage (6) est constitué d'un matériau résistant aux hautes températures.

6. Procédé selon la revendication n° 5, **caractérisé en ce que** l'élément d'estampage (6) est constitué d'un matériau à base de nickel résistant aux hautes températures.

7. Procédé selon une des revendications n° 1 à n° 6, **caractérisé en ce que** la pièce d'oeuvre (1, 2) est une pièce d'une aube (7), en particulier d'une aube de soufflante d'une turbine à gaz aéronautique.

8. Procédé selon une des revendications n° 1 à n° 7, **caractérisé en ce que** la pièce d'oeuvre (1, 2) est une pièce d'un composant hybride constitué de plusieurs pièces assemblées.
